Europäisches Patentamt

European Patent Office

Office européen des brevets

(11) Veröffentlichungsnummer: **0 340 536**
**A1**

# (12) EUROPÄISCHE PATENTANMELDUNG

(21) Anmeldenummer: 89107046.8

(22) Anmeldetag: 19.04.89

(51) Int. Cl.⁴: **B23K 1/00 , H05B 3/00**

(30) Priorität: 06.05.88 DE 3815568

(43) Veröffentlichungstag der Anmeldung:
08.11.89 Patentblatt 89/45

(84) Benannte Vertragsstaaten:
CH DE FR GB IT LI

(71) Anmelder: **Siemens Aktiengesellschaft**
**Wittelsbacherplatz 2**
**D-8000 München 2(DE)**

(72) Erfinder: **Schuster, Rudolf**
**Graf-Andechs-Strasse 8**
**D-8011 Heimstetten(DE)**

(54) Heizelement zur Übertragung von Energie mittels Strahlung.

(57) Die wesentlichen Vorteile des erfindungsgemäßen Heizelementes, das insbesondere für Reflow-Lötprozesse an Leiterplatten eingesetzt werden soll, sind die nahezu konstante Temperaturverteilung über das die Strahlung nach außen hin abgebende Teil des Heizelementes und die sehr schnelle Regelbarkeit aufgrund geringer Eigenmasse verbunden mit dem Einsatz von Quarzstrahlern. Im Stand der Technik verwendete direkt auf das Bearbeitungsgut strahlende Widerstandsheizkörper sind demgegenüber mit ungleichmäßiger Temperaturverteilung behaftet und sehr träge. Das Heizelement, bestehend aus einem Hohlkörper, in dem ein oder mehrere Quarzstrahler gleichmäßig verteilt sind, ist in der Lage, sekundäre Strahlung (3) über eine Heizfläche (4) nach außen hin abzugeben. Die Vergleichmäßigung der primären Strahlung (2) geschieht durch Reflektion im Innenraum (1), wodurch die Heizfläche (4) an ihrer Außenseite eine Temperatur von beispielsweise 350° C mit nahezu konstanter Verteilung aufweisen kann. Bei dieser Temperatur der Heizfläche (4) wird nach außen hin Wärmestrahlung emittiert, die im mittleren Bereich des Infrarotlichtes liegt.

FIG 1

## Heizelement zur Übertragung von Energie mittels Strahlung

Die Erfindung betrifft ein Heizelement zur Übertragung von Energie mittels Strahlung, insbesondere zur Behandlung von Leiterplatten mit oberflächenmontierbaren Bauelementen mittels Infrarotstrahlung.

Um die Anforderungen an Einrichtungen zur Montage von oberflächenmontierbaren Bauelementen, beispielsweise mittels Reflow-Löten, in Bezug auf Qualität und Schnelligkeit zu erfüllen, werden die Behandlungseinheiten und die darin enthaltenen Heizelemente ständig weiterentwickelt. Die besonderen Anforderungen an die Wärmebeaufschlagung einer SMD-Leiterplatte (Surface Mounted Device) sollte im wesentlichen darauf ausgerichtet sein, den Lötprozeß schnell durchzuführen, ohne jedoch die für Wärmestrahlung mehr oder weniger empfindlichen Körper der Bauelemente zu stark zu erhitzen. Eine Behandlungseinrichtung, die dies bereits berücksichtigt ist in der deutschen Patentanmeldung mit der amtlichen Nummer P 38 02 901.4 beschrieben. Die hierin eingesetzten Mittel zur gezielten Steuerung der zeitlichen Beaufschlagung der Leiterplatten mittels Wärmestrahlung werden meist intermittierend verwendet. Es können zum einen die beiden extreme Zustände eingestellt werden, die einen maximalen Strahlungsdurchgang von den Strahlern zur Leiterplatte zulassen oder einen Strahlungsschatten auf der Leiterplatte erzeugen. Dazwischen sind verschiedene variierbare Einstellungen möglich, mittels derer mehr oder weniger Strahlung in Richtung Leiterplatte durchgelassen wird. Da durch den Einsatz von Infrarot-Strahlern, deren charakteristisches Verhalten bei Ein- oder Ausschaltvorgängen relativ träge ist, der Regelbereich eines damit durchgeführten Lötprozesses dort seine Grenzen findet, wo beispielsweise das Ende der Wärmebeaufschlagung durch die Trägheit von Infrarot-Strahlern oder durch Sekundärstrahler nicht schnell genug erreicht werden kann, ist die Notwendigkeit eines schneller regelbaren Heizelementes gegeben. Zudem ist die Wirkung von sekundären Strahlern in einem derartigen Behandlungsraum grundsätzlich als ein Störfaktor zu betrachten, der Lötprozesse negativ beeinflusst.

Der Erfindung liegt die Aufgabe zugrunde, ein Heizelement zur Übertragung von Energie mittels Strahlung bereitzustellen, daß die gewünschte Strahlung gleichmäßig emittiert und somit gezielt auf den zu behandelnden Gegenstand einwirkt.

Die Lösung dieser Aufgabe wird durch den kennzeichnenden Teil des Anspruches 1 wiedergegeben.

Der Erfindung liegt die Erkenntnis zugrunde, daß die von einem oder mehreren Strahlern ausgehende primär erzeugte Strahlung, die räumlich unterschiedlich stark verteilt ist, durch die ein- oder mehrmalige Reflektion in einem Raum, in dem sich die Strahler befinden, vergleichmäßigt werden kann. Daraus resultierend ist der Raum so ausgelegt, daß ein Teil der Raumbegrenzung als Heizfläche erscheint, die die mittlerweile vergleichmäßigte primäre Strahlung über ihre Innenfläche aufnimmt und über ihre Außenfläche nach außen hin mittels sekundärer Strahlung abgibt. Die restliche Raumbegrenzung ist gegen Wärmeleitung und/oder Strahlung isolierend ausgebildet.

Eine besonders vorteilhafte Ausgestaltung der Erfindung sieht vor, daß die genannte restliche Raumbegrenzung aus nach innen hin reflektierendem Material besteht. Diese Ausführungsform gewährleistet eine gute Vergleichmäßigung der primären Strahlung im innern des Heizelementes bei gleichzeitig geringer Aufheizung der restlichen Raumbegrenzung. Es ist von besonderem Vorteil, wenn die restliche Raumbegrenzung sich relativ wenig aufheizt, damit sie nicht als Sekundärstrahler mit trägem Abkühlverhalten wirkt. Diese Ausführungsform ist ein Beitrag zur schnellen Regelbarkeit des Heizelementes.

Eine andere vorteilhafte Ausgestaltung der Erfindung sieht vor, daß die restliche Raumbegrenzung schichtweise aus einer die Primärstrahlung aufnehmenden und nach außen hin gegen Wärmeleitung isolierenden Wandung besteht. Diese Ausführungsform des Heizelementes hat sehr gute Eigenschaften bezüglich der Vergleichmäßigung der primären Strahlung. In diesem Fall liegt im inneren des Heizelementes bereits ein bestimmter Anteil von Strahlung vor, der von der restlichen Raumbegrenzung wieder emitiert wird. Dies bedeutet, daß die primäre Strahlung von der restlichen Raumbegrenzung teilweise absorbiert und nicht vollständig reflektiert wurde, wobei die restliche Raumbegrenzung sich zum Teil aufheizt und selbst als sekundärer Strahler wirkt. Die Verlustenergie wird durch die nach außen hin vorgenommene Isolierung gegen Wärmeleitung minimiert. Ein besonderer Vorteil dieser Ausführung ergibt sich durch die Unempfindlichkeit der inneren Fläche der restlichen Raumbegrenzung bezüglich Verschmutzungen. Somit können im Betrieb immer vorhandene Verschmutzungen in Kauf genommen werden, ohne daß sich die Charakteristik der Wärmeübertragung wesentlich ändert.

Zum Einsatz in einem erfindungsgemäßen Heizelement sind prinzipiell die verschiedensten Strahlungsquellen denkbar. Um jedoch eine gute Regelbarkeit des Heizelementes zu gewährleisten, ist es vorteilhaft Widerstandsheizkörper einzusetzen.

Die Zielsetzung, die Regelbarkeit des Heizelementes derart zu verfeinern, daß sehr schnelle Aufheizungen und Abkühlphasen nach dem Ausschalten des Heizelementes verwirklicht werden können, wird in vorteilhafter Weise durch den Einsatz von Quarzstrahlern als primäre Strahlungsquellen erreicht. Die Wellenlänge eines Quarzstrahlers liegt beiderseits des sichtbaren Lichtes zum einen im langwelligen ultravioletten Bereich und zum anderen im kurzwelligen infraroten Bereich. Charakteristisch für diese Bauelemente ist eine schnelle Reaktion der abgegebenen Wärmemenge durch Strahlung in Abhängigkeit von Änderungen in der elektrischen Versorgung.

Durch die Ausgestaltung der Heizfläche, die die im inneren des Heizelementes vergleichmäßigte Strahlung aufnimmt und in Form von sekundärer Strahlung nach außen hin abgibt, als eine dünne Wandung wird in vorteilhafter Weise ein Beitrag zur schnellen Regelbarkeit des Heizelementes eingebracht. Dies beruht auf der so klein wie möglich ausgelegten Wärmekapazität der Heizfläche, die über die Stärke der Wandung verändert werden kann.

Zur Beeinflussung der Heizfläche bezüglich ihrer Wärmeübertragungseigenschaften ist es von Vorteil die Innenseite als eine Wärmestrahlung absorbierende Fläche und die Außenseite als eine Wärmestrahlung emittierende Fläche auszulegen. Dies bedeutet für beide Male die Verwendung einer dunklen Oberfläche, da schwarze Körper, als Idealfall, die besten Absorpitonseigenschaften haben, die nach dem kirchhoffschen Strahlungsgesetz gleich ihren Emissionseigenschaften sind.

Zur weiteren Verbesserung der schnellen Regelbarkeit des Heizelementes ist in vorteilhafter Weise die zeitweilige Spülung des Innenraumes mittels Kühlgas vorgesehen. Da in der Regel keinerlei Oxidationsprozesse zu beachten sind, ist es vorteilhaft aus Kostengründen Luft einzusetzen.

Im folgenden wird anhand von schematischen Zeichnungen ein Ausführungsbeispiel beschrieben.

Fig. 1 zeigt ein erfindungsgemäßes Heizelement 1 mit gleichmäßig darin verteilten primären Strahlungsquellen 6, deren primäre Strahlung 2 im Raum 1 durch Reflektion an den restlichen Raumbegrenzungen 5 vergleichmäßigt wird und durch Zwischenschaltung der Heizfläche 4 in Form von sekundärer Strahlung 3 übertragen wird.

Fig. 2 zeigt eine Seitenansicht des Heizelementes, wobei andeutungsweise die Halterung 7 einer primären Strahlungsquelle 2 sichtbar ist.

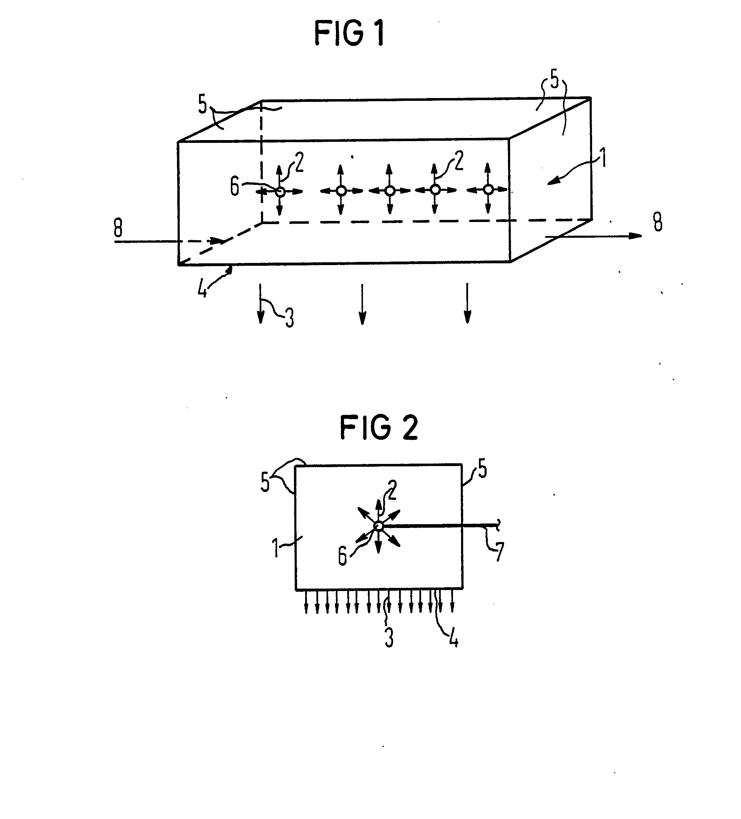

In der Fig. 1 ist ein erfindungsgemäßes Heizelement in Form eines Quaders dargestellt, von dem lediglich die Kanten gezeichnet sind. Die Flächen erscheinen hier transparent. Der Innenraum 1 des Heizelementes hat in diesem speziellen Beispiel fünf gleichmäßig verteilte primäre Strahlungsquellen 6, die die primäre Strahlung 2 aussenden. Die Flächen, die den Innenraum 1 nach außen hin abgrenzen werden zum einen durch die Heizfläche 4, die auf der Unterseite zu erkennen ist, sowie durch die restlichen Raumbegrenzungen 5, wodurch der Innenraum abgeschlossen ist, dargestellt. Die Charakteristik bezüglich der Wärmeübertragung ist im Fall der Heizfläche 4 so gewählt, daß die im Innern hauptsächlich durch die primären Strahlungsquellen 6 erzeugte primäre Strahlung 2 von der Heizfläche 4 absorbiert und von dieser nach außen hin in Form der sekundären Strahlung 3 emittiert wird.

Betrachtet man die einzelnen Bauteile des Heizelementes unter dem Gesichtspunkt der Fähigkeit Wärme zu übertragen, so sind deren Absorptions-, Reflektions- und Emissionseigenschaften von Bedeutung. Bei der Durchführung von Wärmebehandlungsprozessen, wie z.B. dem Reflow-Löten ist es wesentlich, die Bauteile auf einer Leiterplatte möglichst wenig thermisch zu belasten und außerdem eine bestimmte vorgegebene Temperatur-Zeit-Kurve möglichst exakt nachzufahren. In diesem Fall ist eine Forderung, daß beispielsweise die Temperatur der Heizfläche 4 im Betrieb des Heizelementes bei einem für einen entsprechenden Lötprozeß vorteilhaften Wert von ca. 350° C liegt. Diese Temperatur sollte im Idealfall an allen Stellen der Heizfläche 4 anliegen. Die gleichmäßige Verteilung der primären Strahlung 2 in Bezug auf die Heizfläche 4 wird zum einen durch die Gestaltung des Innenraumes 1 mit gleichzeitiger gleichmäßiger Verteilung der primären Strahlungsquellen 6 erreicht. Darüber hinaus wird durch die Ausbildung der restlichen Raumbegrenzungen 5 als Reflektoren eine weitere Verfeinerung der gleichmäßigen Strahlungsbeaufschlagung der Heizfläche 4 von innen her erzielt, indem die primäre Strahlung 2 mehrmals im Innenraum 1 reflektiert werden kann. Um vor allem die Randbereiche der Heizfläche 4 ebenfalls auf dem gleichen vorgegebenen Temperaturniveau zu halten kann es vorteilhaft sein, die in der Fig. 1 senkrecht dargestellten Flächen der restlichen Raumbegrenzung 5 beispielsweise schräg anzustellen oder Teile der restlichen Raumbegrenzung parabolisch zu wölben. Außerdem können auch an bestimmten Stellen Wärmeisolierungen angebracht werden, nämlich dort, wo Wärmeverluste durch Abstrahlung nach außen hin, kombiniert mit einer Wärmeleitung von der Heizfläche 4 zur restlichen Raumbegrenzung 5, die gleichmäßige Temperaturverteilung auf bzw. in der Heizfläche 4 beeinflussen. Durch die Tatsache, daß sich ein Aufheizen der restlichen Raumbegrenzung 5 nicht vermeiden läßt, wird die Heizfläche 4 von innen her nicht nur von der primären Strahlung 2 beaufschlagt, die direkt oder indirekt von den primären Strahlungsquellen 6 auf die Heizfläche 4 trifft, sondern die restlichen Raumbegrenzungen 5 absorbieren einen Teil der primären Strahlung 2 und wirken ihrerseits durch die Emission entsprechender Strahlungsanteile als Strahler. Die Art dieser Strahlung ist von deren Körpertemperatur abhängig.

Bezogen auf die speziellen Anforderungen des Reflow-Lötprozesses bei Leiterplatten ist ein erfindungsgemäßes Heizelement, das auf den bisher beschriebenen Grundlagen aufbaut, wie folgt ausgelegt:

a) Die Heizfläche 4 ist aufgrund der Forderung der schnellen Regelbarkeit relativ dünn ausgelegt, beispielsweise im Bereich von 1 mm. Um den Anteil der von der Heizfläche 4 an ihrer Innenseite aufgenommenen Strahlung aus dem Innenraum 1 zu maximieren ist diese Fläche möglichst dunkel ausgebildet. Die Heizfläche 4 überträgt die durch Übertragung mittels Strahlung aufgenommene Wärmemenge durch Wärmeleitung an ihrer Außenseite und gibt sie in Form der sekundären Strahlung 3 nach außen hin ab, was ebenfalls durch eine dunkle Ausgestaltung der Außenfläche begünstigt wird. Die Materialstärke der Heizfläche 4 kann je nach Erfordernis variiert werden, wobei zu beachten ist, daß zunehmende Materialstärke die Regelbarkeit verlangsamt, jedoch die Gleichmäßigkeit der Temperaturverteilung verbessert oder umgekehrt.

b) Die primären Strahlungsquellen 6 sind aufgrund der Erfordernis der schnellen Regelbarkeit als Quarzstrahler ausgebildet. Derartige handelsübliche Elemente emitieren Licht, was ungefähr in dem Bereich von 0,2 bis 3,7 $\mu$m liegt. Dies bedeutet, daß zum einen langwelliges ultraviolettes Licht, sowie sichtbares Licht und zum anderen kurzwelliges infrarotes Licht durch derartige Quarzstrahler erzeugt wird. Die Heizfläche 4 sorgt auf jeden Fall für eine Veränderung der Wellenlänge auf dem Weg von den primären Strahlungsquellen 6 bis hin zur sekundären Strahlung 3.
Die Wellenlänge der sekundären Strahlung 3 wird im wesentlichen von der an der Außenseite vorliegenden Oberflächentempertur der Heizfläche 4 bestimmt. Bei einer Temperatur von ca. 350° C sind dies in etwas 5 $\mu$m. Damit befindet sich die sekundäre Strahlung 3 im mittleren Bereich des Infrotlichtes.

Die Möglichkeit anstelle von Quarzstrahlern Widerstandsheizkörper einzusetzen besteht prinzipiell, ist jedoch mit einer Einbuße an schneller Regelbarkeit verbunden. Durch die Unterbringung in einem Hohlkörper, der, wie beschrieben, nur über eine Fläche emittiert, ist jedoch gegenüber dem Stand der Technik, der direkten Einstrahlung von der Strahlungsquelle, bereits eine vorteilhafte Pufferwirkung vorhanden.

Aus dem Zusammenwirken der bisher beschriebenen Effekte resultiert der besondere Vorteil, daß Quarzstrahler aufgrund ihrer schnellen Regelbarkeit eingesetzt werden und der Einsatz eines Strahlungsschirmes, in diesem Fall die Heizfläche 4, für eine Transmission der Wellenlänge in den mittleren infraroten Bereich sorgt. Dies hat bezogen auf das Löten von Leiterplatten den Vorteil, daß die meist dunklen Bauelemente, die durch kurzwelliges Licht schneller aufgeheizt werden, als Körper mit heller Oberfläche, geschont werden, was für die empfindlichen Bauteile von großem Nutzen ist. Die schnelle Regelbarkeit resultiert aus dem Einsatz von Quarzstrahlern, deren Strahlungsspektrum jedoch durch die Einkapselung nicht nach außen vordringt. Die sekundäre Strahlung 3 liegt im mittleren Bereich des infraroten Lichtes. Mögliche Materialien zur Ausbildung der Heizfläche 4 sind Aluminium, Titan, Eisen. Aluminium oder Titan ist nach dem bisherigen Stand der Kenntnisse bevorzugt zu verwenden, da beispielsweise eine Heizfläche 4 aus Eisen zur Erzielung der gleichen Eigenschaften wie bei Aluminium mindestens die 1,5fache Stärke haben muß.

Die Tendenz, daß beim Löten größere Flächen mit niedrigerer Temperatur als bisher eingesetzt werden, schlägt sich in der sehr flachen und nach Möglichkeit sehr dünnen Ausführung eines Heizelementes nieder. Ein Heizelement nach Fig. 1 hat beispielsweise die Dimensionen: Höhe 300 mm, Länge 800 mm, Breite 640 mm. Der Abstand der Heizfläche 4 zu einer zu verlötenden Leiterplatte beträgt beispielsweise 100 mm und ist in der Regel konstant. Zweckmäßigerweise wird mit geringem Überstand der Heizfläche 4 in Bezug auf die Leiterplatte gearbeitet. Die mit einem erfindungsgemäßen Heizelement mögliche schnelle Regelbarkeit der Wärmebeaufschlagung einer Leiterplatte erübrigt es beispielsweise einen zwischen Leiterplatte und Heizelement intermetierend eingebrachten Strahlungsschirm zur Steuerung einer Temperatur-Zeit-Kurve auf der Leiterplatte zu verwenden. Die Temperaturschwankungen eines Quarzstrahlers liegen ca. im Bereich von ± 5 %. Durch die Maßnahme der Vergleichmäßigung der Temperatur an der Heizfläche 4 können bei einem Lötprozeß mit den oben beschriebenen Daten Temperaturtoleranzen auf der Leiterplatte von bis zu ± 2,5° C erreicht werden. Hierbei ist jedoch zu beachten, daß verschiedene Bauteile, Leiterbahnen oder nicht belegte Leiterplattenflächen unterschiedliche Reflektionseigenschaften haben. Aussagefähige Messungen müssen demnach jeweils normiert werden.

Die mechanische Ausgestaltung der restlichen Raumbegrenzung 5 kann unter Umständen Lüftungsstützte vorsehen, um den Innenraum 1 des Heizelementes zu entlüften. Dies kann für den Fall von Vorteil sein, daß durch Undichtigkeiten Lötdämpfe in den Innenraum 1 gelangen. Ein Hilfsmittel zur weiteren Beschleunigung der Regelbarkeit des Heizele mentes stellt die Zufuhr von Kühlgas 8 dar, die durch Pfeile in der Fig. 1 angedeutet ist. Hiermit kann beim Ausschalten der primären Strahlungsquellen 6 die Heizfläche 4 von der Innenseite her gekühlt werden.

Die Fig. 2 zeigt die gleichen Elemente, wie sie in der Fig. 1 auftauchen, wobei zusätzlich die zentrale Lage der primären Strahlungsquellen 6 mit deren Halterung 7 angedeutet ist.

Ein erfindungsgemäßes Heizelement kann ganz allgemein in verschiedenartigen Öfen eingesetzt werden. Seine besonderen Vorteile kommen jedoch im Chargenofen zur Geltung. Der Einsatz in einem Durchlaufofen ist prinzipiell möglich, aufgrund der dem Durchlaufofen eigenen Regelparameter jedoch nicht von so großen Vorteil wie beim Chargenofen.

## Ansprüche

1. Heizelement zur Übertragung von Energie mittels Strahlung, insbesondere zur Behandlung von Leiterplatten mit oberflächenmontierbaren Bauelementen,
**gekennzeichnet durch**
folgende Merkmale:

a) mindestens einen das Heizelement bildenden Innenraum (1) zur Vergleichmäßigung von im inneren des Raumes erzeugter primärer Strahlung (2),

b) mindestens eine primäre Strahlungsquelle (6) zur Erzeugung der primären Strahlung (2),

c) die partielle Ausbildung der Raumbegrenzung als Heizfläche (4), wobei die primäre Strahlung aus dem inneren des Raumes absorbiert und sekundäre Strahlung (3) nach außen mittels der Heizfläche (4) emitiert wird,

d) die bezüglich Wärmeleitung und/oder Strahlung isolierende Ausbildung der restlichen Raumbegrenzung (5).

2. Heizelement nach Anspruch 1,
**dadurch gekennzeichnet,**
daß die restliche Raumbegrenzung (5) aus nach innen reflektierendem Material besteht.

3. Heizelement nach Anspruch 1,
**dadurch gekennzeichnet,**
daß die restliche Raumbegrenzung (5) aus einer Wärmestrahlung aufnehmenden und nach außen hin gegen Wärmeleitung isolierenden Schicht besteht.

4. Heizelement nach einem der vorhergehenden Ansprüche,
**dadurch gekennzeichnet,**
daß die primären Strahlungsquellen (6) Widerstandsheizkörper sind.

5. Heizelement nach einem der Ansprüche 1 bis 3,
**dadurch gekennzeichnet,**
daß die primären Strahlungsquellen (6) Quarzstrahler sind.

6. Heizelement nach einem der vorhergehenden Ansprüche,
**dadurch gekennzeichnet,**
daß die Heizfläche (4) als eine dünne Wandung ausgebildet ist.

7. Heizelement nach einem der vorhergehenden Ansprüche,
**dadurch gekennzeichnet,**
daß die Heizfläche (4) auf der Innenseite eine Wärmestrahlung absorbierende und auf der Außenseite eine Wärmestrahlung emittierende Oberfläche besitzt.

8. Heizelement nach einem der vorhergehenden Ansprüche,
**dadurch gekennzeichnet,**
der Innenraum (1) des Heizelementes zeitweise mittels Kühlgas (8) kühlbar ist.

9. Heizelement nach Anspruch 8,
**dadurch gekennzeichnet,**
daß das Kühlgas (8) Luft ist.

# FIG 1

# FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3533352 (LEONIDAS C. MILLER) <br> * Spalte 1, Zeile 46 - Spalte 2, Zeile 6; Figur 1 * | 1, 2, 5, 6, 8, 9 | B23K1/00 <br> H05B3/00 |
| | --- | | |
| X | GB-A-853336 (A.V. ROE & CO. LIMITED) <br> * Seite 1, Zeile 33 - Zeile 61; Figur 1 * | 1, 3, 5, 6, 8 | |
| | --- | | |
| A | US-A-3765475 (HOOPER) <br> * Spalte 3, letzter Absatz * <br> * Spalte 4, Absatz 1-3; Figur 1 * | 1, 2, 5-9 | |
| | --- | | |
| A | US-A-3836745 (COSTELLO) | | |
| | --- | | |
| A | FR-A-1527629 (RANK XEROX LIMITED) | | |
| | ----- | | |

**RECHERCHIERTE SACHGEBIETE (Int. Cl.4)**

B23K
H05B

Der vorliegende Recherchenbericht wurde für alle Patentansprüche erstellt

| Recherchenort | Abschlußdatum der Recherche | Prüfer |
|---|---|---|
| DEN HAAG | 14 JULI 1989 | RAUSCH R.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)